# EUROPÄISCHE PATENTSCHRIFT

(11) **EP 0 781 308 B1**
(45) Veröffentlichungstag und Bekanntmachung des Hinweises auf die Patenterteilung: **05.07.2000**
(21) Anmeldenummer: 95933359.2
(22) Anmeldetag: 12.09.1995
(51) Int. Cl.: C08L 23/02

(54) **POLYOLEFIN MIT PERMANENTEN ANTISTATISCHEN UND NICHT-TAUBILDENDEN EIGENSCHAFTEN, VERFAHREN ZU SEINER HERSTELLUNG UND SEINE VERWENDUNG**
POLYOLEFIN WITH PERMANENT ANTI-STATIC AND NON-DEW-FORMING PROPERTIES, A METHOD OF PRODUCING THE SAME AND THE USE THEREOF
POLYOLEFINE PRESENTANT DES PROPRIETES ANTISTATIQUES PERMANENTES ET NE FORMANT PAS DE BUEE, SON PROCEDE DE FABRICATION ET SON UTILISATION

(30) Priorität: 15.09.1994 DE 4432777
(43) Veröffentlichungstag der Anmeldung: 02.07.1997
(73) Patentinhaber: A. SCHULMAN PLASTICS N.V., 2880 Bornem (BE)
(72) Erfinder: JANSSENS, Marcel, B-9200 Dendermonde (BE)
(74) Vertreter: Godemeyer, Thomas, Dr.
(86) Internationale Anmeldenummer: EP9503576
(87) Internationale Veröffentlichungsnummer: WO9609347

(56) Entgegenhaltungen:
- GB-A- 2 112 789
- DATABASE WPI Section Ch, Week 9349 Derwent Publications Ltd., London, GB; Class A17, AN 93-392823 & JP,A,05 295 191 (SANYO CHEM IND) , 9.November 1993
- DATABASE WPI Section Ch, Week 8550 Derwent Publications Ltd., London, GB; Class A82, AN 85-314135 & JP,A,60 219 285 (TORAY IND) , 1.November 1985
- DATABASE WPI Section Ch, Week 8737 Derwent Publications Ltd., London, GB; Class A97, AN 87-260391 & JP,A,62 179 938 (TORAY IND) , 7.August 1987

## Beschreibung

Gegenstand der Erfindung ist ein Polyolefin mit permanenten antistatischen und/oder nicht-taubildenden Eigenschaften, ein Verfahren zur Herstellung dieses Polyolefins sowie die Verwendung des Polyolefins und eine Folie, die aus diesem Polyolefin hergestellt wird.

Polyolefinfolien besitzen den Nachteil, daß sie sich bei der Verarbeitung relativ schnell statisch aufladen und aufgrund dieser statischen Aufladung aneinander haften, was die maschinelle Weiterverarbeitung solcher Folien und beispielsweise das Öffnen von aus diesen Folien hergestellten Tüten erschwert. Um diese statischen Aufladungen zu verhindern, werden den Polyolefinen vor der Verarbeitung antistatische Mittel zugeführt, die die statische Aufladung der hergestellten Produkte unterdrücken.

Weiterhin müssen Polyolefinfolien für Anwendungen, in denen sie transparent sein und bleiben müssen, mit entsprechenden tauverhindernden Mitteln ausgerüstet werden. So ist es beispielsweise bei der Verwendung als Verpakkungsmaterial wünschenswert, daß die verpackte Ware für den Verbraucher durch die Verpackungsfolie hindurch sichtbar und gut erkennbar bleibt. Folien mit diesen Eigenschaften werden weiterhin auch für Gewächshäuser verwendet, wo es ebenfalls notwendig ist, daß sie ihre lichtdurchlässigen Eigenschaften dauerhaft behalten. Antitaumittel verhindern, daß in der Verpackung befindliche Feuchtigkeit auf der Innenseite an der Folienoberfläche kondensiert und so die Transparenz der Folie nachteilig beeinflußt.

Aus dem Stand der Technik ist es bekannt, als solche antistatische Mittel ethoxylierte Fettsäureamine mit hohen Molekulargewichten zu verwenden. Besonders bevorzugt sind fettsäurehaltige Substanzen, die eine Kettenlänge von 12 bis 18 Kohlenstoffeinheiten und einen Ethoxylierungsgrad von etwa 2 mol pro Mol der Substanz besitzen. Als weitere Stoffe können aber auch Stearate wie beispielsweise Glycerolmonostearat verwendet werden.

JP-A-60 219 285 beschreibt ein Antitau- und Antistatikmittel, das im wesentlichen aus Polyamid mit tert-Aminogruppen in den Haupt- oder Seitenketten oder einem Polyamid mit Polyalkylenglycolgruppen in der Hauptkette besteht.

Als Antitaumittel werden ebenfalls hochmolekulare, langkettige Verbindungen, insbesondere Fettsäureester, verwendet. So werden beispielsweise Glycerolmonooleat und Sorbitolmonolaurat in Polyolefinen für Verpackungsfolien und Polyglycerolester in Polyolefinen für Gewächshausfolien eingesetzt. Diese Substanzen besitzen jedoch den Nachteil, daß sie aus dem Inneren der Folie allmählich an die Oberfläche diffundieren, was zu einer allmählichen Verschlechterung der antistatischen und der Antitau-Eigenschaften der Folie führt.

Derartige Diffusionsprozesse führen aber auch zu einer unerwünschten Veränderung der physikalischen und optischen Eigenschaften der Folie. So werden die Folien klebrig; es kommt zu einem sichtbaren Ausblühen von Substanzen, die die Transparenz stört. Auch die antistatischen Eigenschaften solcher Folien werden mit der Zeit ungleichmäßig.

Die technische Aufgabe der vorliegenden Erfindung ist es daher, Polyolefine zur Verfügung zu stellen, die den entsprechend ausgerüsteten Polyolefinen des Standes der Technik überlegen sind. Diese Polyolefine sollen dauerhaft antistatisch und gegen Taubildung ausgerüstet sein und zwar ohne daß diese Substanzen bei aus diesen Polyolefinen hergestellten Folien allmählich an die Oberfläche der Folie diffundieren. Das Ausblühen von Substanzen soll vermieden werden und die Transparenz der aus dem Polyolefin hergestellten Folie erhalten bleiben.

Diese technische Aufgabe wird gelöst durch eine Polyolefinzusammensetzung enthalten 20 bis 50 Gew% eines hydrophilen Polyetherblockamids dadurch gekennzeichnet, daß die Zusammensetzung zusätzlich ein Maleinsäureanhydrid enthaltendes Polyolefinharz oder Polyolefinelastomer oder ein Styrolelastomer in einer Konzentration von 1 bis 20 Gew % enthält, wobei diese Substanzen jeweils 0.1 bis 5 Gew % Maleinsäureanhydrid enthalten, und daß das Polyetherblockamid die Formel I besitzt 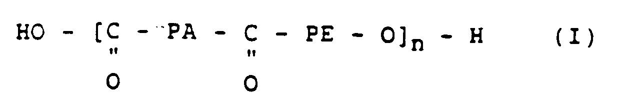 wobei PA das Polyamidsegment und PE das Polyethersegment representiert und 10 ≤ n ≤ 60 ist. Als Polyethersegment kann ein Polyether der Formeln II

[- CH₂ - CH₂ - O -]ₘ (II),

Formel III 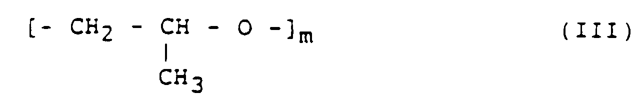 oder Formel IV

[CH₂ - CH₂ - CH₂ - CH₂ - O -]ₘ (IV)

eingesetzt werden, wobei m eine ganze Zahl zwischen 10 und 100 ist. Als Polyamidsegment können Polyamide ausgewählt aus der Gruppe Polyamid 6; Polyamid 6,6; Polyamid 11; Polyamid 12; Polyamid 6,12; Polyamid 6,11 oder Gemische derselben enthalten sein.

Der Einsatz derartiger Polyetherblockamide ist bei ganz unterschiedlich zusammengesetzten Polyolefinen möglich.

So kann das Polyolefin beispielsweise Polyethylen niedriger Dichte, lineares Polyethylen niedriger Dichte oder auch übliches Polyethylen, Polypropylen-Homopolymer, Polypropylen-Blockcopolymer, Polypropylen-Randomcopolymer, Ethylen-Vinylacetat-Copolymer, Polybutylen und Polymethylpenten oder ein Gemisch derselben sein.

Besonders bevorzugt ist ein Polyetherblockamid, das als Polyamidsegment Polyamid 12 und als Polyethersegment das Segment der Formel II

[- CH₂ - CH₂ - O -]ₘ (II),

besitzt, in dem erfindungsgemäßen Polyolefin enthalten.

Die erfindungsgemäßen Polyolefine enthalten als Zusatzstoff 1 bis 20 Gew% eines Polyolefinharzes, Polyolefinelastomers oder Styrolelastomers, wobei diese Substanzen bevorzugt 0,1 bis 5 % Maleinsäureanhydrid enthalten.

In einer bevorzugten Ausführungsform handelt es sich bei den Maleinsäureanhydrid enthaltenden Verbindungen um Polypropylenharze, Ethylen-Propylen-Elastomer, lineares Polyethylen niedriger Dichte oder ein Styrol-Isopren-Styrol-Elastomer.

Die Herstellung der erfindungsgemäßen Polyolefine erfolgt durch Compoundierung der einzelnen Bestandteile in einem ZSK 30 Zweischnecken-Compoundierer bei 180 bis 240 °C. Die Mischung wird nach dem Schmelzen in einem Wasserbad abgekühlt und ggf. granuliert. Das so hergestellte Granulat kann anschließend in Folien jeglicher Dicke überführt werden, in Profile extrudiert werden oder in fertige Artikel spritzgegossen werden.

So können beispielsweise Zusammensetzungen hergestellt werden, die 70 Gew% Polypropylen und 30 Gew% Polyetherblockamid enthalten. Diese besitzen hervorragende dauerhafte antistatische Eigenschaften und sind insbesondere für den Spritzguß geeignet. Zur Herstellung von Folien wird bevorzugt eine Zusammensetzung von 60 Gew% Polypropylen und 40 Gew% Polyetherblockamid verwendet. Derartige Folien besitzen hervorragende, dauerhaft haltbare antistatische und Antitau-Eigenschaften.

Durch den Zusatz von Polyolefinharz oder Polyolefinelastomeren, die Maleinsäureanhydrid in einer Menge von 0,1 bis 5 Gew% enthalten, können die mechanischen Eigenschaften derartiger Folien oder Formkörper noch verbessert werden. Dabei werden bevorzugt 5 bis 15 Gew% eines maleinsäureanhydridhaltigen Polypropylens oder 5 bis 15 Gew% von maleinsäureanhyridhaltigem Ethylen-Propylen-Elastomer hinzugefügt, wobei eine Menge von 10 Gew% besonders bevorzugt ist. Durch Hinzufügung dieser Polymere wird das Amid in die Polyethylen- oder Polypropylenmatrix eingebunden, was überraschenderweise die Verarbeitung eines entsprechenden Polyolefins, wie auch die mechanischen Eigenschaften der Fertigprodukte, besonders den Schlagwiderstand, verbessert.

Eine typische Anwendung für derartige Polyolefine sind beispielsweise sogenannte biaxial orientierte Polypropylenfilme, wobei das erfindungsgemäße Polyolefin beim Extrudieren in die Außenschicht einer koextrudierten Mehrschichtfolie eingebracht wird. Hierdurch wird eine Folie erhalten, die über eine besonders gute Siegelfähigkeit verfügt, hervorragende optische und antistatische Eigenschaften aufweist sowie keine Diffusion der Additive an die Oberfläche der Folie zeigt. Das erfindungsgemäße Polyolefin ist daher den aus dem Stand der Technik bekannten ähnlichen antistatischen und/oder mit Antitaumitteln ausgerüsteten Polyolefinen erheblich überlegen.

Mit dem erfindungsgemäßen Polyolefinen können beispielsweise auch Formkörper, Folien und Extrusionsprodukte hergestellt werden auf der Basis von Polyethylen niedriger Dichte, linearem Polyethylen niedriger Dichte und Ethylen-Vinylacetat-Copolymer. Diese Materialien sind für Extrusionsverfahren genauso geeignet wie für das Spritzgießen. Die aus diesen Grundmaterialien hergestellten Produkte besitzen ebenfalls hervorragende antistatische und nicht-taubildende Eigenschaften.

Somit kann das erfindungsgemäße Polyolefin in idealer Weise zur Herstellung von Polyolefinfolien mit verbesserten antistatischen und nicht-taubildenden Eigenschaften verwandt werden. Aus dem Polyolefin können so Folien jeglicher Dicke und beliebige Formkörper hergestellt werden, die hervorragende physikalische, chemische und mechanische Eigenschaften besitzen.

Die folgenden Beispiele sollen die Erfindung näher erläutern. In diesen Beispielen werden aus den erfindunggemäßen Polyolefinen verschiedene Produkte hergestellt und deren Eigenschaften mit denen aus herkömmlich ausgerüsteten Polyolefinen verglichen.

### Beispiele

### Vergleichsbeispiele 1 bis 7, Beispiele 1 bis 3

Es werden verschiedene Polypropylene hergestellt. Die Zusammensetzung der Polypropylene gibt Tabelle 1 wieder.

Die Vergleichsbeispiele 1 und 2 enthalten Polypropylene des Standes der Technik, die bisher bekannte Antistatikmittel und Antitaumittel enthalten, nämlich ethoxylierte Fettsäureamine. In den Beispielen V3 bis V7 und 1 bis 3 wurden diese durch das Polyetherblockamid gemäß der Erfindung ersetzt. Aus diesen Polypropylenen werden biaxial orientierte Polypropylenfolien (boPP-Folien) und Formkörper hergestellt. Dabei werden in den Beispiel 1, V3 und V4 boPP-Folien mit eine Wandstärke von 20 µm und in den Beispielen V5 bis V7 und 2 bzw. 3 Zusammensetzungen zum Spritzgießen hergestellt. Bei diesen einzelnen Produkten wurde jeweils der Oberflächenwiderstand in Ohm, der Ladungsabfall in Sekunden, die Oberflächeneigenschaften und die Izod-Kerbschlagfestigkeit in J/m ermittelt.

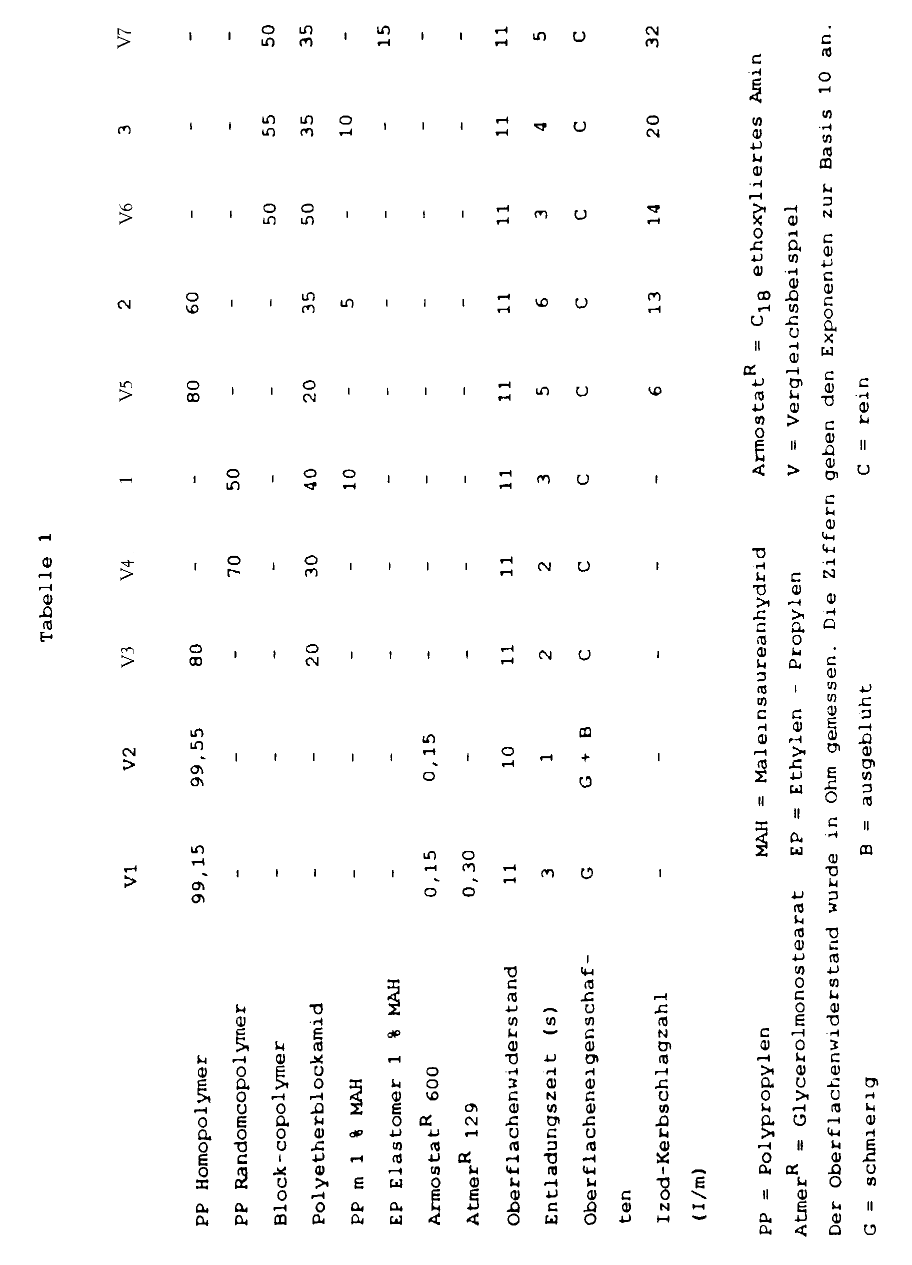

Aus der Tabelle ist zu entnehmen, daß bei Ausrüstung des Polypropylens mit den herkömmlichen fettsäurehaltigen Aminen oder Stoffen wie Glycerolmonostearat nur schlechte Oberflächeneigenschaften erzielt werden. Bei Ausrüstung der Folien gemäß Beispiele 1 mit Polyetherblockamiden bleiben der Oberflächenwiderstand und die Entladungszeit weitgehend konstant, währenddessen die Oberflächeneigenschaften gegenüber dem Stand der Technik der Vergleichsbeispiele 1 und 2 wesentlich verbessert werden. Das gleiche gilt für die Beispiel 2, daß eine Zusammensetzung zeigt, die zum Spritzguß geeignet ist. Auch hier wird durch die Zugabe von Polyetherblockamid ein hervorragender Oberflächenwiderstand, eine gute Entladungszeit und positive Oberflächeneigenschaften sowie eine hervorragende Kerbschlagfestigkeit erreicht.

### Vergleichsbeispiele 8 bis 10, Beispiel 4

Die folgenden Beispiele zeigen Zusammensetzungen und Anwendungen der erfindungsgemäßen Polyolefine für Verpakkungszwecke im Vergleich zu denen des Standes der Technik. Die aus diesen Polyolefinen hergestellten Folien werden zum Vergleich ihrer Eigenschaften einem Kalttautest ("cold-fog test") unterzogen. Es werden Folien einer Dicke von etwa 30 µm hergestellt. Diese Folien werden über einem oben offenen Glascontainer, der in einer Höhe von 1 cm mit Wasser gefüllt ist, fixiert und in einen Kühlschrank gelegt. Das Entstehen von Tau wird in Abhängigkeit von der Zeit beobachtet. Ein schlechter Film zeigt sofortige Taubildung auf der Innenseite der Folie, die zum Wasser gewandt ist. Eine gute Folie für Verpakkungszwecke zeigt für mindestens vier Wochen keine Taubildung. Die folgende Tabelle 2 zeigt die Zusammensetzung und Eigenschaften der untersuchten Folien.

**Tabelle 2**

| | V8 | V9 | 4 | V10 |
|---|---|---|---|---|
| LDPE | 99 | 99 | 80 | 65 |
| Glycerolmonooleat | 1 | - | - | - |
| Sorbitolmonolaurat | - | 1 | - | - |
| Polyetherblockamid | - | - | 20 | 30 |
| LLDPE (1 % MAH) | - | - | 5 | - |
| Kalttautest (Wochen) | 4 | 4 | > 12 | > 12 |
| Oberflächeneigenschaften | VG,S | G | C | C |
| LDPE = Polyethylen niedriger Dichte LLDPE = lineares Polyethylen niedriger Dichte MAH = Maleinsäureanhydrid VG = sehr schmierig G = schmierig S = klebrig C = rein | | | | |

Aus Tabelle 2 ist zu ersehen, daß die Folien aus den erfindungsgemäßen Polyolefinen eine etwa dreimal geringere Neigung zur Taubildung aufweisen als die der Vergleichsbeispiele 8 und 9. Weiterhin besitzen sie erheblich bessere Oberflächeneigenschaften.

### Vergleichsbeispiele 11 und 12, Beispiel 5

Nachfolgend wurden aus den erfindungsgemäßen Polyolefinen einer Zusammensetzung gemäß Tabelle 3 Folien hergestellt zur Verwendung in Gewächshäusern. Es wurde eine Folie einer Dicke von 180 µm hergestellt mit einer Länge von 1 m und einer Breite von 30 cm. Mit diesen Folien wurde ein Heißtautest ("hot-fog-test") durchgeführt. Dazu wird die Folie über einem Rahmen in verschiedenen Winkeln fixiert. Auf diese Art und Weise kann die Taubildung in Abhängigkeit des Winkels, mit dem die Folie auf dem Gewächshaus fixiert ist, festgestellt werden. Übliche Winkel sind 45°, 60° und 90° zur Basis des Gewächshauses. Die relative Luftfeuchtigkeit wird auf 100 % eingestellt, und die Außentemperatur beträgt 21 °C. Der unten offene Rahmen mit der darauf gespannten Folie wird über einen Container mit Wasser gesetzt, wobei die Wassertemperatur zwischen 21 und 34°C liegt, um die Temperaturen eines Tag- und Nachtzyklus, der je 12 Stunden beträgt, zu simulieren. Eine schlechte Folie zeigt Ausblühen, was unerwünscht ist, da es die Lichtdurchlässigkeit der Folie vermindert. Weiterhin zeigt eine schlechte Folie eine Taubildung in einem Zeitraum von weniger als einer Woche. Eine gute Folie zeigt kein Ausblühen und einen Antitaueffekt für eine Minimalzeit von 6 Monaten, was einer Haltbarkeit der Antitau-Eigenschaften von 3 Anbauperioden entspricht. Die Zusammensetzung und Eigenschaften der Folien sind in der folgenden Tabelle 3 zusammengestellt.

**Tabelle 3**

| | V11 | V12 | 5 |
|---|---|---|---|
| EVA - 14 % | 97 | 65 | 55 |
| Polyglycerolester | 3 | - | - |
| Polyetherblockamid | - | 35 | 40 |
| LLDPE (1 % MAH) | - | - | 5 |
| Oberflächeneigenschaften | B | C | C |
| Heißtautest (Monate ohne Taubildung) | 3 | 8 | 8 |
| LLDPE = lineares Polyethylen niedriger Dichte MAH = Maleinsäureanhydrid EVA-14 % = Ethylen-Vinylacetat-Copolymer mit 14 % Vinylacetat V = Vergleichsbeispiel B = Ausblühen C = rein | | | |

Aus Tabelle 3 ist zu entnehmen, daß die erfindungsgemäß zusammengesetzten Polyolefine mit einem Anteil von Polyetherblockamiden, den mit den üblichen Polyglycerolestern ausgerüsteten Polyolefinen erheblich überlegen sind und bessere Oberflächeneigenschaften und Antitau-Eigenschaften besitzen. Die Folie, hergestellt aus der Zusammensetzung gemäß Vergleichsbeispiel 11 mit Polyglycerolester, zeigt ein erstes Ausblühen bereits nach einem Monat. Die Folie, die mit Polyetherblockamiden hergestellt wurde, zeigt selbst nach 8 Monaten kein Ausblühen. Damit sind die aus dem erfindungsgemäßen Polyolefin hergestellten Folien denen des Standes der Technik bezüglich ihrer antistatischen und nicht-taubildenden Eigenschaften erheblich überlegen.

## Patentansprüche

1. Polyolefinzusammensetzung mit permanenten antistatischen und/oder nicht-taubildenden Eigenschaften enthaltend ein Polyolefin und 20 bis 50 Gew% eines hydrophilen Polyetherblockamids dadurch gekennzeichnet,
daß die Zusammensetzung zusätzlich ein Maleinsäureanhydrid enthaltendes Polyolefinharz oder Polyolefinelastomer oder Styrolelastomer in einer Konzentration von 1 bis 20 Gew% enthält, wobei diese Substanzen jeweils 0,1 bis 5 Gew% Maleinsäureanhydrid enthalten,
und daß das Polyetherblockamid die Formel I 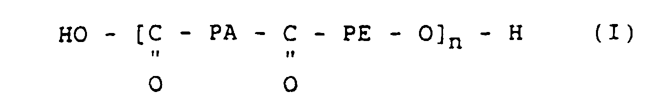 besitzt und PA das Polyamidsegment und PE das Polyethersegment angibt und 10 ≤ n ≤ 60 ist,
und daß das Polyethersegment ein Polyether der Formel II,
[- CH₂ - CH₂ - O -]ₘ (II)
der Formel III 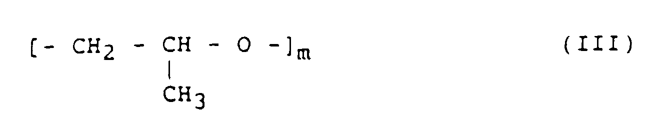 oder der Formel IV
[CH₂ - CH₂ - CH₂ - CH₂ - O -]ₘ (IV)
ist und m eine ganze Zahl von 10 bis 100 ist.

2. Polyolefin nach Anspruch 1, dadurch gekennzeichnet, daß das Polyamidsegment ausgewählt ist aus der Gruppe Polyamid 6; Polyamid 6,6; Polyamid 11; Polyamid 12; Polyamid 6,12; Polyamid 6,11.

3. Polyolefin nach Anspruch 1 oder 2, dadurch gekennzeichnet, daß als Polyolefin ein Polyethylen, Polypropylen-Homopolymer, Polypropylen-Blockcopolymer, Polypropylen-Randomcopolymer, Ethylen-Vinylacetat-Copolymer, Polybutylen oder Polymethylpenten enthalten ist.

4. Polyolefin nach Ansprüchen 1 bis 3, dadurch gekennzeichnet, daß als Polyolefin ein Polyethylen niedriger Dichte oder ein lineares Polyethylen niedriger Dichte enthalten ist.

5. Polyolefin gemäß Ansprüchen 1 bis 4, dadurch gekennzeichnet, daß das Polyamidsegment Polyamid 12 ist und das Polyethersegment die Formel II
[- CH₂ - CH₂ - O -]ₘ (II)
besitzt und m eine ganze Zahl von 10 bis 100 ist.

6. Polyolefin nach Ansprüchen 1 bis 5, dadurch gekennzeichnet, daß das Maleinsäureanhydrid enthaltende Polyolefin ein Polypropylenharz, ein Ethylen-Propylen-Elastomer oder ein lineares Polyethylen niedriger Dichte oder ein Styrol-Isopren-Styrol-Elastomer ist.

7. Verfahren zur Herstellung des Polyolefins gemäß Ansprüchen 1 bis 6, dadurch gekennzeichnet, daß die Komponenten in einer Compoundiereinrichtung gemischt und bei 180 bis 240 °C geschmolzen werden, in einem Wasserbad abgekühlt und anschließend granuliert werden.

8. Verwendung der Polyolefine gemäß Ansprüchen 1 bis 6 zur Herstellung von Polyolefinfolien mit verbesserten antistatischen und nicht-taubildenden Eigenschaften.

9. Folie aus dem Polyolefin gemäß Ansprüchen 1 bis 6 mit permanenten antistatischen und nicht-taubildenden Eigenschaften.

## Claims

1. A polyolefin composition, having permanent antistatic and/or non-fogging properties, containing a polyolefin and from 20 to 50% by weight of a hydrophilic polyether blockamid, characterized in that the polyolefin composition additionally contains a maleic anhydride containing polyolefin resin or polyolefin elastomer or a styrene elastomer is contained at a concentration of from 1 to 20 % by weight, with each of these substances containing from 0.1 to 5 % by weight of maleic anhydride,
and that the polyether blockamide is of the formula I 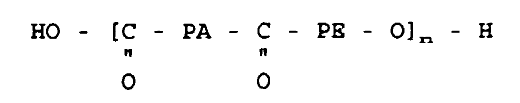 and PA represents the polyamide segment and PE represents the polyether segment and wherein 10 ≤ n ≤ 60
and the polyether segment is a polyether of formula II
[- CH₂ - CH₂ - O -]ₘ (II)
formula III 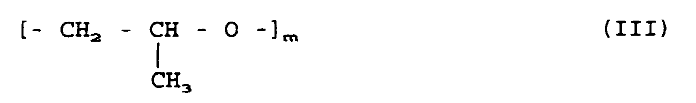 or formula IV
[CH₂ - CH₂ - CH₂ - CH₂ - O -]ₘ (IV)
and m is an integer between 10 and 100.

2. The polyolefin according to claim 1, characterized in that the polyamide segment is selected from the group of polyamide 6; polyamide 6,6; polyamide 11; polyamide 12, polyamide 6,12; polyamide 6,11.

3. The polyolefin according to claims 1 or 2, characterized in that a polyethylene, polypropylene homopolymer, polypropylene block copolymer, polypropylene random copolymer, ethylene-vinyl acetate copolymer, polybutylene, or polymethylpentene is contained as the polyolefin.

4. The polyolefin according to claims 1 to 3, characterized in that a low density polyethylene or a linear low density polyethylene is contained as the polyolefin.

5. The polyolefin according to claims 1 to 4, characterized in that the polyamide segment is polyamide 12 and the polyether segment is of the formula II
[- CH₂ - CH₂ - O -]ₘ (II)
and m is an integer from 10 to 100.

6. The polyolefin according to claims 1 to 5, characterized in that the polyolefin containing maleic anhydride is a polypropylene resin, an ethylenepropylene elastomer, or a linear low density polyethylene, or a styreneisoprene-styrene elastomer.

7. A process for the production of the polyolefin according to claims 1 to 6, characterized in that the components are compounded in a compounding unit and melted at 180 to 240°C, cooled in a water bath and subsequently granulated.

8. Use of the polyolefins according to claims 1 to 6 for the production of polyolefin foils having improved antistatic and non-fogging properties.

9. A foil, made of the polyolefin according to claims 1 to 6, having permanent antistatic and non-fogging properties.

## Revendications

1. Composition de polyoléfine, ayant des propriétés permanentes antistatiques et/ou anti-buée, comprenant une polyoléfine et entre 20 et 50 % en poids d'un amide en bloc hydrophile de polyéther, **caractérisée par le fait**
que la composition comprend en sus une résine de polyoléfine ou un élastomère de polyoléfine contenant un anhydride de l'acide maléique, ou un élastomère de styrène dans une concentration comprise entre 1 et 20 % en poids, ces substances contenant respectivement entre 0,1 et 5 % en poids d'anhydride de l'acide maléique,
et que l'amide en bloc de polyéther présente la formule I 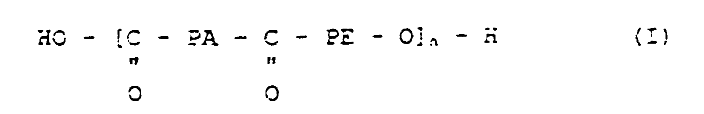 et que PA représente le segment de polyamide et PE représente le segment de polyéther et où 10 ≤ n ≤ 60,
et que le segment de polyéther est un polyéther de la formule II,
[- CH₂ - CH₂ - O -]ₘ (II)
de la formule III, 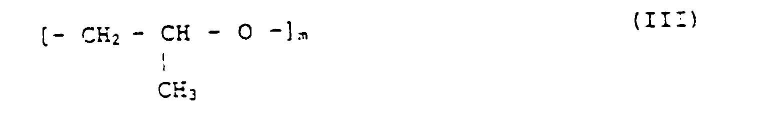 ou de la formule IV
[CH₂ - CH₂ - CH₂ - CH₂ - O -]ₘ (IV)
et que m est un nombre entier compris entre 10 et 100.

2. Polyoléfine selon la revendication 1, **caractérisée par le fait** que le segment de polyamide est choisi dans le groupe de polyamide 6; polyamide 6,6; polyamide 11; polyamide 12; polyamide 6,12; polyamide 6,11.

3. Polyoléfine selon la revendication 1 ou 2, **caractérisée par le fait** qu'un polyéthylène, un homopolymère de polypropylène, un copolymère en bloc de polypropylène, un copolymère aléatoire de polypropylène, un copolymère d'éthylène-acétate de vinyle, un polybutylène ou un polyméthylpentène est contenu en tant que polyoléfine.

4. Polyoléfine selon les revendications 1 à 3, **caractérisée par le fait** qu'un polyéthylène de faible densité ou un polyéthylène linéaire de faible densité est contenu en tant que polyoléfine.

5. Polyoléfine selon les revendications 1 à 4, **caractérisée par le fait** que le segment de polyamide est du polyamide 12 et que le segment de polyéther présente la formule II
[- CH₂ - CH₂ - O -]ₘ (II)
et que m est un nombre entier compris entre 10 et 100.

6. Polyoléfine selon les revendications 1 à 5, **caractérisée par le fait** que la polyoléfine contenant de l'anhydride de l'acide maléique est une résine de polypropylène, un élastomère d'éthylène propylène ou un polyéthylène linéaire de faible densité ou un élastomère de styrène-isoprène-styrène.

7. Procédé de fabrication de la polyoléfine selon les revendications 1 à 6, **caractérisée par le fait** que les composants sont mélangés dans un dispositif à compounder et fondus à une température de 180 à 240 °C, refroidis dans un bain d'eau et ensuite granulés.

8. Utilisation des polyoléfines selon les revendications 1 à 6 pour la fabrication de feuilles de polyoléfine ayant des propriétés antistatiques et anti-buée améliorées.

9. Feuille faite de la polyoléfine selon les revendications 1 à 6, présentant des propriétés permanentes antistatiques et anti-buée.
